# EUROPEAN PATENT APPLICATION

(11) **EP 1 574 958 A1**
(43) Date of publication of application: **14.09.2005**
(21) Application number: 03777389.2
(22) Date of filing: 09.12.2003
(51) Int. Cl.: G06F 12/00, H04N 5/91

(54) **FILE MANAGEMENT PROGRAM**

(30) Priority: 16.12.2002 JP 2002363534; 06.11.2003 JP 2003376998
(71) Applicant: KONICA MINOLTA HOLDINGS, INC., Tokyo 100-0005 (JP)
(72) Inventor: Ueda, Yutaka, Konica Minolta Photo Imaging, Inc., Hachioji-shi, Tokyo 192-8505 (JP); Hung, Po-Chieh, Konica Minolta Techn. Center, Inc., Hachioji-shi, Tokyo 192-8505 (JP); Igarashi, T., Konica Minolta Photo Imaging, Inc., Hino-shi, Tokyo 191-8511 (JP)
(74) Representative: Henkel, Feiler & Hänzel
(86) International application number: PCT/JP2003/015719
(87) International publication number: WO 2004/055676

(57) **Abstract**

A computer program product to control a computer to function as a folder name generating device to generate a folder name, the folder name generating device comprises a reading section to read information stored in or attached to a file of a specified format, wherein the information is defined so as to have a predetermined meaning; and a folder name generating section to generate a folder name of a folder to control the file of the specified format on a basis of the information having the predetermined meaning.

## Description

### BACKGROUND OF THE INVENTION

The present invention relates to a file control program, and in particular, to a file control program for controlling a file relating to images in a structure that is easy to use.

In recent years, with spread of photographing equipment such as a digital camera and a camera-fitted cellphone, the number of users using photographic images as digital data is increasing. In the digital camera or the camera-fitted cellphone, photographic images are recorded in a memory means housed in the equipment or in a various types of media detachable from the equipment, and the photographic images can be read by the use of a display means of the equipment. However, it is necessary for a user who photographs frequently to store image data of a photograph in a separate memory means, because data size of photographic images is great, and memory capacity of the memory means housed in the equipment and of the media is not great.

For example, Japanese Patent Publication Open to Public Inspection No. 2002-185896 discloses a data processing service method and its system capable of backing up, simply, image data of photographs obtained through photographing by a digital camera. According to the aforementioned patent document, capacity of a recording medium attached to or housed in a small-sized and light-weight digital camera is about 8 - 16 M Byte, while data amount of a single sheet of images obtained through photographing under high image quality mode is close to 1 M Byte, and thereby, the number of sheets of frames for photographing allowed by the above-mentioned recording medium is only about 10, and it is impossible to buy many sheets of spare recording media because they are expensive, which is a problem. In the service for conducting backup of image data by the use of a service terminal installed in a store for the problem stated above, there is shown a method to conduct a step to read photographed image data stored in a memory of a user's digital camera and a step to preserve the photographed image data thus read in a recording medium which can be accessed by the user. Further, Japanese Patent Publication Open to Public Inspection No. 2001-331781 shows that date information recorded in an image is read, and metadata of the file are rewritten depending on the value of the date information thus read.

In the case of a user who is skillful in operations of a personal computer, the user inserts various types of media mounted on a digital camera into a slot on the personal computer to read image data, or the user connects the digital camera or a camera-fitted cellphone with the personal computer to transfer image data of photographs taken to the personal computer, to accumulate image data in the personal computer, and thereby, the user displays or reads image data by the use of an image display application that is installed in the personal computer in advance.

### (Patent Document 1)

Japanese Patent Publication Open to Public Inspection No. 2002-185896 (pages 3 - 7, Fig. 1)

### (Patent Document 2)

Japanese Patent Publication Open to Public Inspection No. 2001-331781 (pages 4 - 7, Fig. 1)

In the case of recording image data recorded in a photographing equipment such as a digital camera or a camera-fitted cellphone or in media for a digital camera on a hard disc of a personal computer or on an information recording medium such as CD-R, when writing image data of a single photographing equipment or one medium on one memory means, a folder containing image datum or a plurality of image data has only to be written on the memory means as it is, however, when much image data recorded on plural photographing equipment or on plural media are recorded on a single memory means, if image data are not recorded in a data recording structure (file tree structure) composed of a folder having an appropriate name, the location of the image data and the name of the photographic equipment for the image data or the name of a medium for the image data become unclear, which is extremely inconvenient.

In particular, in the case of a digital camera, when arranging image data of plural digital cameras on one memory means, if image data are copied as they are, data recording structure cannot be unified, and further, copying is sometimes made to be unable by overlapped folder names, because data recording structure and folder names are not unified by a maker that manufactures a camera.

Therefore, when writing image data recorded on many photographing equipment on a single memory means, there are needed operations that a user itself makes a folder, by thinking about data recording structure of a memory means, and then, gives to each folder an appropriate name that can be controlled, and writes image data on the folder. However, these operations are difficult for a user who is not skillful for personal computer operations, and they are complicated work even for a user who is skillful for personal computer operations.

In recent years, there is available a service wherein negative films for photographs taken by a film camera are read by a scanner and are recorded on an information recording medium such as CD-R to be offered to a user. By using this service, it is possible to utilize a large number of photographs taken formerly as digital data. However, in this service, information recording media are made in a unit of negative films provided in the case of ordering, and therefore, when controlling by collecting image data recorded on plural information recording media with a single memory means, the aforementioned operations need to be repeated.

When putting image data recorded in various photographing equipment, media and information recording media separately in a single memory means, it is necessary for a user to conduct complicated operations to create a folder having an appropriate name, and therefore, these image data are stored on a decentralized basis after all without being used, in many cases, resulting in a problem that image data cannot be used effectively and utilization of photo-service cannot be promoted.

### SUMMARY OF THE INVENTION

The invention has been achieved in view of the problems stated above, and its primary object is to provide a file control program that can record image data recorded on a photographing equipment such as a digital camera or on a media for digital cameras by means of a structure that can be used by other memory means easily.

For attaining the aforementioned object, the file control program of the invention is one which makes a computer to function as a means to read information that is recorded on or attached to a file of a specific form and prescribed meaning is defined in advance, and makes the computer to function as a means to generate a name of a folder that controls a file of a specific form by using information whose prescribed meaning which has been read is defined in advance.

In the invention, it is possible to employ the structure wherein, when reading information whose prescribed meaning is defined in advance, the computer mentioned above is made to function as a judging means to judge whether a file is one obtained by photographing with a digital camera or one obtained by image-capturing with a film scanner, and when the result of the judgment shows that the file is one obtained by image-capturing with a film scanner, the computer is made to function as a transmitting means to transmit information for urging a user to input a date of photographing.

In the invention, it is possible to employ the structure wherein, when reading information whose prescribed meaning is defined in advance, the computer mentioned above is made to function as a judging means to judge whether a file is one obtained by photographing with a digital camera or one obtained by image-capturing with a film scanner, and when the result of the judgment shows that the file is one obtained by image-capturing with a film scanner, the computer is made to function as a date information specifying means that specifies date information from image data in the file.

Further, in a means to generate the folder name in the invention, it is also possible to construct an arrangement wherein when the aforementioned file is one obtained through photographing by a digital camera, the name of the folder that controls the file is generated for each of the digital cameras, for each of media inserted in the digital cameras, for each of dates of photographing, for each of prescribed file numbers or for each of the prescribed data capacities, and when the aforementioned file is one obtained through photographing by film scanner, the name of the folder that controls the file is generated for each of the films.

In the file control program of the invention, when writing a file in the information recording media such as a photographing equipment such as a digital camera, media for digital cameras and CD-R on another memory means, it is not necessary for a user to conduct complicated operations to make a folder by considering a data recording structure of the memory means and to give an appropriate name to the folder, each time, which makes it possible to control a large number of files collectively with the structure which can be used easily by an application and a photo-service.

### BRIEF DESCRIPTION OF THE DRAWINGS

Fig. 1 is a diagram showing schematically the structure of a computer device including a file control program relating to Example 1 of the invention.
Fig. 2 is a block diagram showing a means wherein the file control program relating to Example 1 of the invention makes a computer to function
Fig. 3 is a diagram of a flow chart showing data recording procedures employing the file control program relating to Example 1 of the invention.
Fig. 4 is a diagram showing a structure example of a folder made by the file control program relating to Example 1 of the invention.
Fig. 5 is a diagram showing an example of the structure of a folder made by the file control program relating to Example 1 of the invention.
Fig. 6 is a diagram showing an example of the structure of a folder made by the file control program relating to Example 2 of the invention.
Fig. 7 is a diagram showing an example of the structure of a folder made by the file control program relating to Example 2 of the invention.
Fig. 8 is a diagram showing an example of the structure of a folder made by the file control program relating to Example 2 of the invention.
Fig. 9 is a diagram showing an example of the structure of a folder made by the file control program relating to Example 2 of the invention.
Fig. 10 is a diagram showing an example of the structure of a folder made by the file control program relating to Example 2 of the invention.
Fig. 11 is a diagram showing an example of the structure of a folder made by the file control program relating to Example 1 of the invention.
Fig. 12 is a diagram showing an example of the structure of a folder made by the file control program relating to Example 1 of the invention.
Fig. 13 is a diagram showing an example of the structure of a folder made by the file control program relating to Example 1 of the invention.
Fig. 14 is a diagram showing an example of the structure of a folder made by the file control program relating to Example 1 of the invention.
Fig. 15 is a diagram showing schematically the external structure of a computer device including a file control program of the invention.
Fig. 16 is a diagram showing schematically the external structure of a computer device including a file control program of the invention.
Fig. 17 is a diagram showing schematically the external structure of a computer device including a file control program of the invention.

### DETAILED DESCRIPTION OF THE PREFERRED EMBODIMENT

The file control program relating to the invention makes, in its preferable embodiment, the computer to function as a means to read information whose prescribed meaning is defined in advance such as date and hour information, file specifying information, image inputting equipment specifying information, order specifying information and user specifying information which are recorded on or attached to the files of a specific form such as DCF (Design rule for Camera File system) form, DPOF (Digital Print Order Format) form, EXIF (Exchangeable image File Format for Digital Still Camera) form or Picture CD form (Eastman Kodak Company), and to function as a means to create a name of a folder that controls a file of a specific form in accordance with rules determined in advance by using information whose prescribed meaning read is defined in advance, thus, a name of the folder is created automatically based on defined information of the file, and a file of prescribed each group is recorded on the folder, thereby, image data recorded on various types of photographing equipment, media and information recording media can be controlled collectively by a single memory means.

An example of the invention will be explained as follows, referring to the drawings, to explain the embodiment of the invention in a more detailed way. (Example 1)

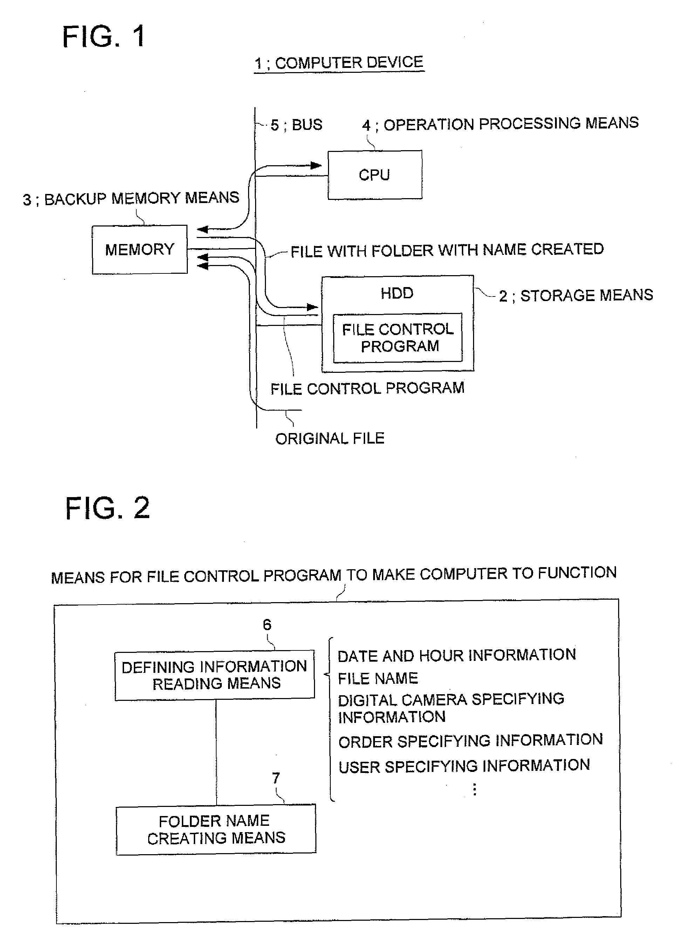

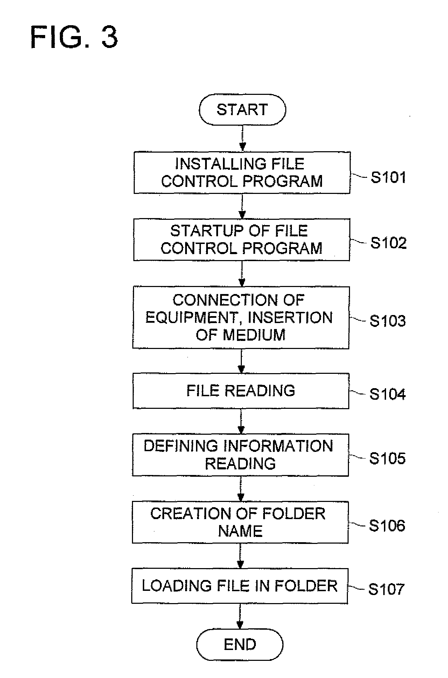

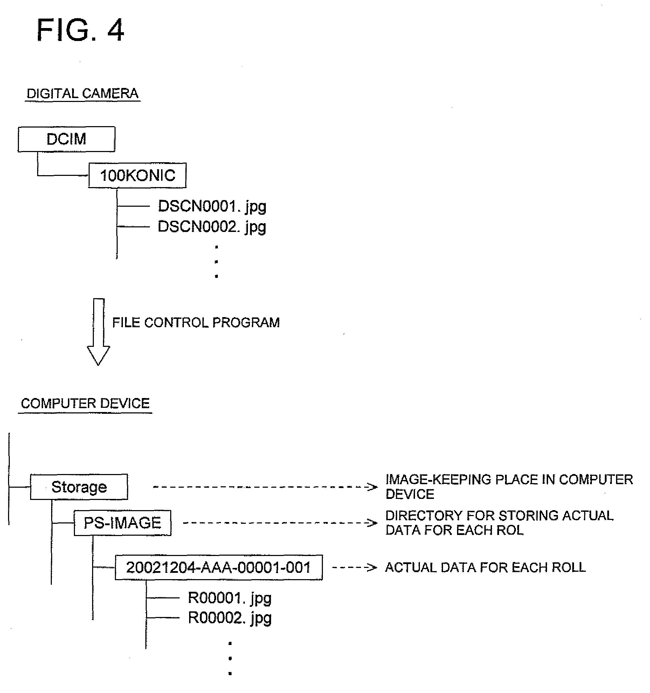

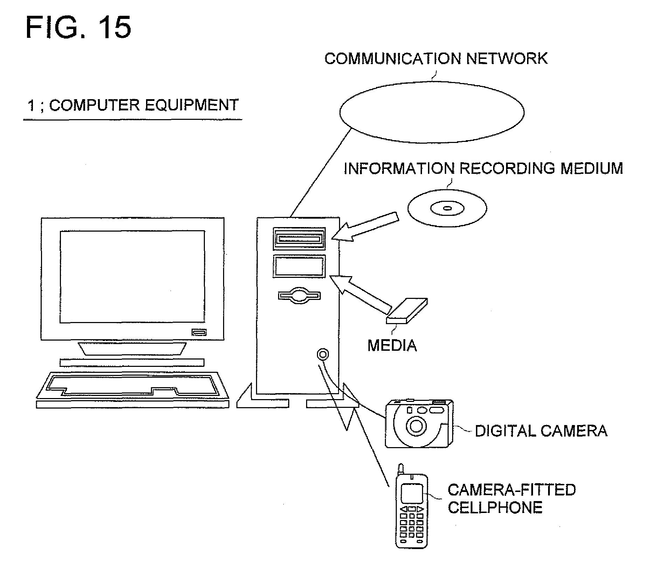

First, the file control program relating to the first example of the invention will be explained as follows, referring to Figs. 1 - 5. Fig. 1 is a diagram showing schematically the structure of the computer device wherein the file control program relating to the present example is installed, and Fig. 2 is a block diagram showing a means with which the file control program makes the computer to function. Fig. 3 is a flow chart showing procedures for recording data employing the file control program, and each of Fig. 4, Fig. 5 and Figs. 11 - 14 is a diagram showing an example of folder structure made by the file control program. Further, each of Figs. 15 - 17 is a diagram showing an appearance structure of the apparatus in which the data control structure rewriting program relating to the present example is installed.

As shown in Fig. 1, computer device 1 of the present example is one wherein memory means 2 such as a hard disc drive (hereinafter referred to as HDD in abbreviation) having therein the installed file control program, and housing and recording a file in the folder that is given its name by the file control program, temporary memory means 3 such as a memory that houses a file control program or a file temporarily and operation means 4 such as CPU for executing the file control program are connected through bus 5.

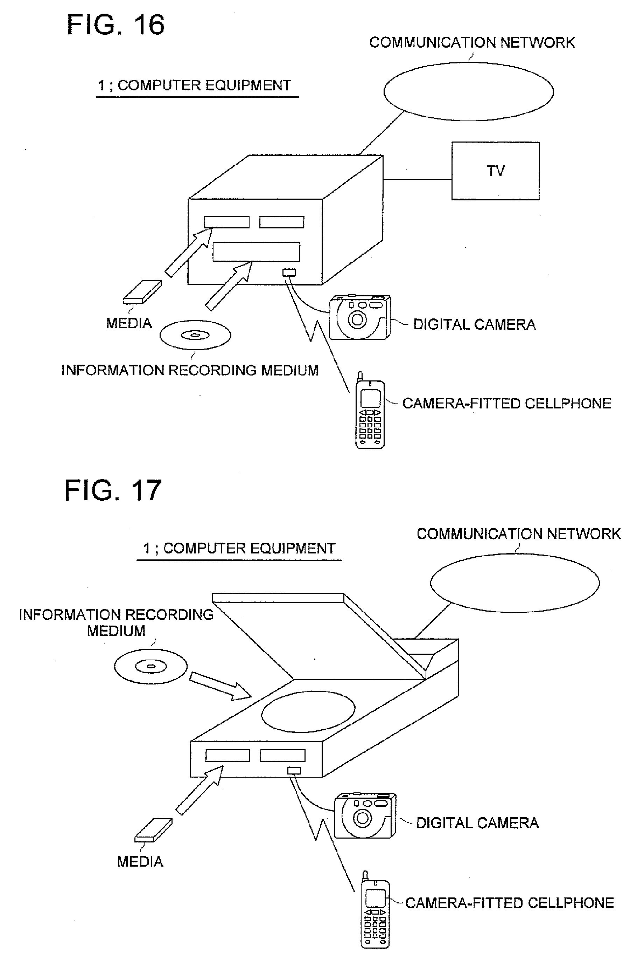

Incidentally, the structure in Fig. 1 is an illustration which has only to be the structure capable of executing the file control program, and it may also be provided, in addition to the structure in the drawing, with a connection terminal such as USB that reads a file from a digital camera or from a camera-fitted cellphone, a media slot that reads a file from various media (hereafter, an information recording medium used for a digital camera is called a medium, to discriminate from an information recording medium such as CD-R and others) such as Smart Media, Compact Flash (a registered trademark), Memory Stick (a registered trademark), SD memory and a multi-media card, CD-R drive that reads a file from a disc type information recording medium such as CD-R/RW, DVD±R/RW, DVD-RAM and Blu-ray disc (hereinafter, these are generically called CD-R) on which image data taken by reading of a negative film through scanning are recorded, and a communication means for taking in image data through a communication network such as Internet. In that case, as computer device 1, a personal computer shown in Fig. 15, an exclusive set top box shown in Fig. 16, a portable writer shown in Fig. 17, DVD player provided with an operation means and a storage means or DVD recorder, for example, may also be employed. Further, a file recorded by the file control program does not necessarily need to be recorded on memory means 2, and it is also possible to employ the structure wherein the file is stored in another memory means of the computer device 1, or the file is stored in a memory means such as a home server or Web server connected to the computer device 1.

Further, as shown in Fig. 2, the file control program to be installed in memory means 2 is one that makes at least a computer to function as defined information reading means 6 that reads defined information such as date and hour information (date and hour for file making and photographing), a file name, user information, information about a digital camera by which the file was made, information about orders of file making and other vendor unique information, from the files of a specific form such as DCF form, DPOF form, EXIF form or Picture CD form, and as folder name creating means 7 that creates a name of a folder which controls the file based on the defined information obtained through reading, in accordance with predetermined rules (for example, extracting information that is common to plural files from the defined information).

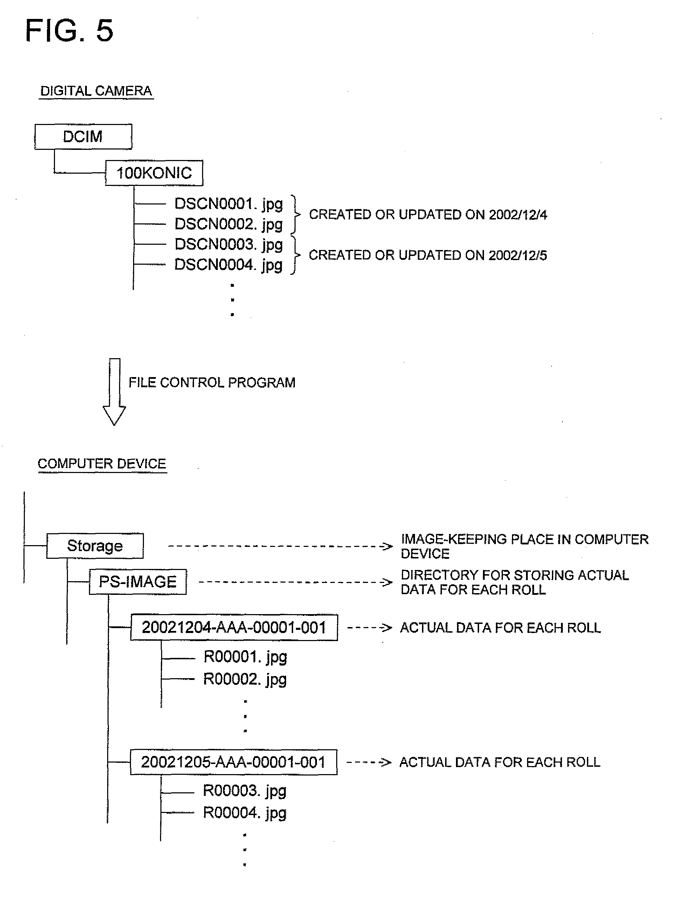

Procedures to record on the prescribed memory means (HDD2 in this case) the files obtained through reading, by the use of computer device 1 in which a file control program having the aforementioned structure, from a photographing equipment such as a digital camera and a camera-fitted cellphone or from media will be explained as follows, referring to a flow chart in Fig. 3 and folder structure examples in Figs. 4 and 5. Incidentally, an explanation will be given as follows on the assumption that a personal computer wherein Microsoft (R), Windows (R) or "95/98/98SE/2000 Professional/XP Home Edition/XP Professional etc." is installed is used, for making the explanation to be easy.

First, a user installs the file control program of the present example in computer device 1, in step S 101. Incidentally, it is also possible to make the program to operate by using an information recording medium such as CD-R on which a file control program is recorded, without installing the file control program on memory means 2, or to make the program to operate with another computer device to be connected to the computer device 1, or with a home server or Web server.

Next, when the file control program is started in step S 102, a file control program stored in memory means 2 is loaded in temporary memory means 3 to be executed.

Next, in step S 103, a user prepares for the transmission of the file by connecting a photographing equipment such as a digital camera or a camera-fitted cellphone to the connection terminal of computer device 1, by inserting into a media slot various media each having thereon a file recorded or by inserting CD-R having thereon a recorded file into the CD-R drive. Then, in step S 104, the file control program reads a series of files from the photographing equipment, media or from CD-R, and stores them in temporary memory means 3. Incidentally, either all of the files or a part of the files recorded in the photographing equipment, media or in CD-R may be read, and when reading a part of the files, the user selects the file by using an operation means of the computer device 1.

This file has only to be a file containing data about an image, and a form of the file and the number of the files are free. In the explanation with an example of a digital camera, as shown on the upper portion in Fig. 4, for example, folder "100KONIC" showing a file storage directory for each group in series (for example, each roll) is provided to be lower than folder "DCIM" showing an image storage place in the digital camera, and respective image data (DSCN0001.jpg, DSCN0002.jpg etc.) are stored in folder "100KONIC".

Next, in step S 105, CPU 4 analyzes image data in folder "100KONIC" by using defined information reading means 6 of the file control program, and reads defined information recorded in or attached to respective image data in advance. This defined information is determined in advance in accordance with a form of the file, and defined information shown in (a) - (w) can be used concretely.

### (Defined information example)

· Common information
(a) Renewal date and hour (for example, date and hour for preparation of a file, and date and hour defined as preparation date and hour in the specification of EXIF)
(b) File name · EXIF characteristic information
(c) Image title name (for example, a title given by a user)
(d) Name of a maker of image input equipment (for example, a model name of a digital camera)
(e) Name of a model of image input equipment (for example, a maker name of a digital camera)
(f) Name of an image maker (for example, a name of a photographer)
(g) Copyright holder for photographing/copyright holder for editing (for example, a name of a copyright holder)
(h) Date and hour for preparation of original image data (for example, date and hour of substantial photographing)
(i) Date and hour for preparation of files
(j) Image unique ID (for example, unique ID given to each image)
(k) Information of photographing location (for example, GPS information and place names) · DPOF characteristic information
(l) User information (for example, user ID necessary to receive specific service)
(m) Service ID (for example, ID showing service offering specific service)
(n) Product ID · DVD characteristic information
(o) Area code (for example, country, district or positional information of a resident) · Other additional information (for example, information which may be described as vendor unique information in DCF)
(p) Envelope number or receipt number (for example, a code number described on DPE envelope)
(q) Store number (for example, a number specifying an accepting store, ID etc.)
(r) Scan location (for example, information showing a location taken by scanning in addition to an accepting store)
(s) Frame number (for example, a file name of DCF or a frame number on a film)
(t) Sort number (for example, orders accepted sequentially in a certain store)
(u) Roll number (for example, sequential numbers of those accepted simultaneously)
(v) Media (for example, a name of a medium for recording, or ID given to a film itself)

Next, in step S 106, CPU 4 creates a name of the holder housing therein the image data, in accordance with rules determined in advance, referring to the defined information which has been read, by using folder name creating means 7 of the file control program. As a creating method for the folder name, it is possible to use an optional method to create a folder name based on defined information, such as, for example, a method wherein the order of priority of the defined information is determined, and the defined information having the highest priority is made to be the folder name, a method wherein a common defined information is extracted by plural image data, and that information is made to be the folder name, and method wherein information wherein plural defined information are combined is made to be the folder name.

For example, when using only date and hour information among defined information, as a simplest example, a folder name of "20021204" is given to the file prepared or updated on December 4, 2002. Further, as an example wherein plural defined information are combined, when a file is prepared or updated on December 4, 2002, and is prepared in (001)^{th} order with a receipt number of 0001 at the store having the store number of AAA (or ID), a method to make the folder name to be "20021204_AAA_0001_001" as shown on the lower portion of Fig. 4 can be used, while, when the file is prepared or updated on December 4, 2002, and is scanned at the location called Tokyo in Japan, and in the case of scanning in the (001)^{th} order of the user having a member number where ID is 012345, a method to make the folder name to be "200021204_JP-Tokyo_ID012345_001" can be used.

Incidentally, the defined information of this kind may either be obtained from the standardized one such as EXIF information or DPOF information (including vendor unique definition), or be obtained from the form like the definition file for each businessman service, if the form is known in advance from the businessman service. Further, the folder name created is made to be unique within at least its range, because the folder having the same name is not allowed to be present in the same image keeping place. When further movement of data is considered, it is preferable to be unique in the same personal computer or the user, and when considering an exchange of communication with other people, it is preferable to be unique in a certain group by putting in a user ID. Further, when using the number of the Basic Residents' Registration, for example, it is more convenient to be unique completely.

Next, in step S 107, CPU 4 makes a folder having the created folder name in memory means 2, and writes image data obtained through reading in the folder. The structure of the folder in the memory means 2 which is shown schematically is represented by the lower portion in Fig. 4, and "PS_IMAGE" folder showing an actual data storing directory is provided to be lower than folder "Storage" showing the image keeping place in computer device 1 (personal computer, home server, Web server etc.), while, folder "20021204_AAA_0001_001" for each group (for example, each roll) made in the aforementioned method is provided to be lower than the "PS_IMAGE" folder, and image data "R00001. jpg" stored in the digital camera are stored in the folder "20021204_AAA_0001_001".

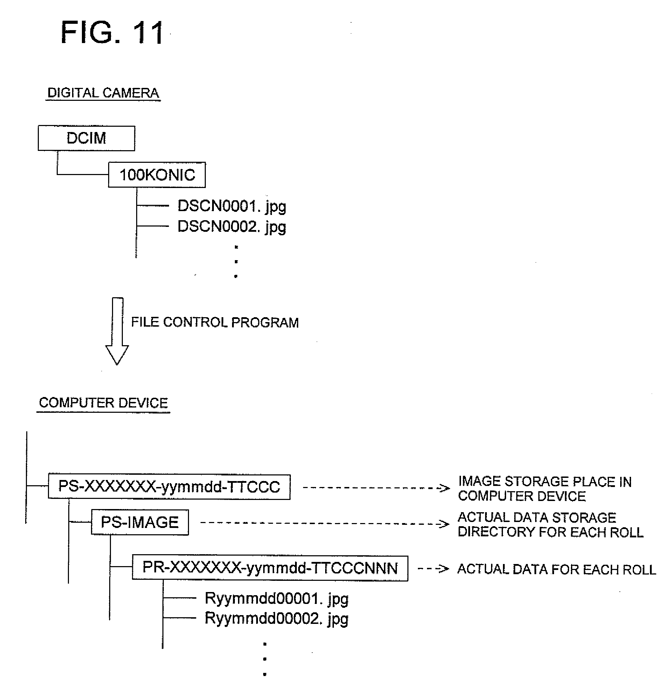

Incidentally, the aforementioned folder name is an example, and an optional name can be used. For example, a name ("PS_XXXXXXX_yymmdd_TTCCC" or "PR_XXXXXXX_yymmdd_TTCCCNNN") made by using location ID [XXXXXXX] such as a location where writing is conducted and specific ID information for the apparatus, a numeral [yymmdd] specifying the date of writing, a numeral (a serial number of the machine) [TT] specifying the apparatus, a sequential number [CCC] and a sequential number [NNN] for each prescribed unit (for example, for each roll or each medium) may be used as a name of the folder showing the image storage place in a computer or a name of the folder housing actual data for each roll, as shown in Fig. 11. Further, the folder structure shown in the drawing is a structure indicated by an application (for example, an explorer) so that it may be understood by a user, and an actual memory means 2 is divided into an area where actual data are recorded and a data control area where a file name of actual data and a storage place (physical address) are recorded, and the folder stated above is described on the data control area.

Though "PS_IMAGE" folder is provided so that the file may be controlled easily in this case, "20021204_AAA_0001_001" folder may also be provided directly to be lower than "Storage" folder, and another folder may also be provided for easy control. Though Fig. 4 shows the structure wherein only image data stored in "100KONIC" folder of a digital camera are recorded, it is also possible to employ the structure wherein when "101konica" folder is present to be in parallel with "100KONIC", for example, image data read from the plural folders are recorded collectively in "20021204_AAA_0001_001" folder. With respect to the date in this case, the date of the last photographing of images in the folder is preferable, but, either an average date or the date of start photographing is enough.

Further, the file name of the image data to be written may either be the same or be renamed a different name, and for the easy control, it is also possible to employ, for example, an arrangement wherein "DSC****. jpg" is changed to "R****. jpg" as shown in Fig. 4, or it is possible to make the name ("Ryymmdd*****. jpg") by using a numeral specifying the date of writing and a swquential number, as shown in Fig. 11. In that case, it is possible either to record without changing a form of image data or to record after converting image data into the form determined in advance (for example, converting all forms into jpg).

Further, when it is possible to divide original image data recorded in one folder or in plural folders into plural groups, after referring to defined information, an arrangement to make a folder for each group can also be employed. For example, when the original file can be divided into "DSC0001.jpg, DSC0002.jpg" made or updated on December 4, 2002 and "DSC0003.jpg, DSC0004.jpg" made or updated on December 5, 2002 as shown in Fig. 5, it is possible to employ an arrangement wherein plural folders such as "20021204_AAA_0001_001" folder and "20021205_AAA_0001_001" folder are made for each digital camera or each medium to contain therein files corresponding to the respective folders. The date for photographing, making and updating can be recognized by Exif information of the digital camera. Further, the file may either be classified on the date basis or be classified by acquiring all date information for the objective files and by dividing evenly a period from the first date to the last date with a prescribed number.

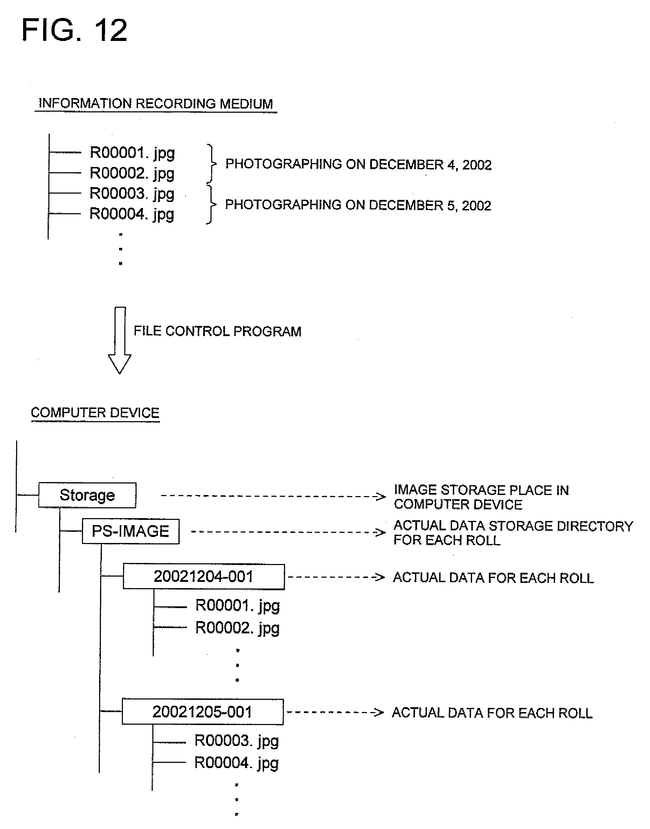

However, in the case of data taken from negative films through reading, an actual date of photographing is not recorded in many cases. Taking the foregoing into consideration, information related to image data such as metadata of Exif, for example, is investigated to judge a file whether it is a file obtained by photographing with a digital camera or a file obtained by capturing images with a film scanner, and when the file is one obtained not by a digital camera but by a film scanner through image-capturing, it is possible to generate and transmit information for urging a user to input a date of photographing, to display information that urges the display means to input based on the aforesaid information, or to urge inputting by a voice generating means so that date information inputted by a user may be used as information of the date of photographing to prepare a plurality of folders such as "20021204_001" folder and "20021205_001" folder for each film and thereby to store a file corresponding to each folder as shown in Fig. 12. It is further possible to search image data in the file without urging a user to input a date of photographing, and to specify the date information therefrom.

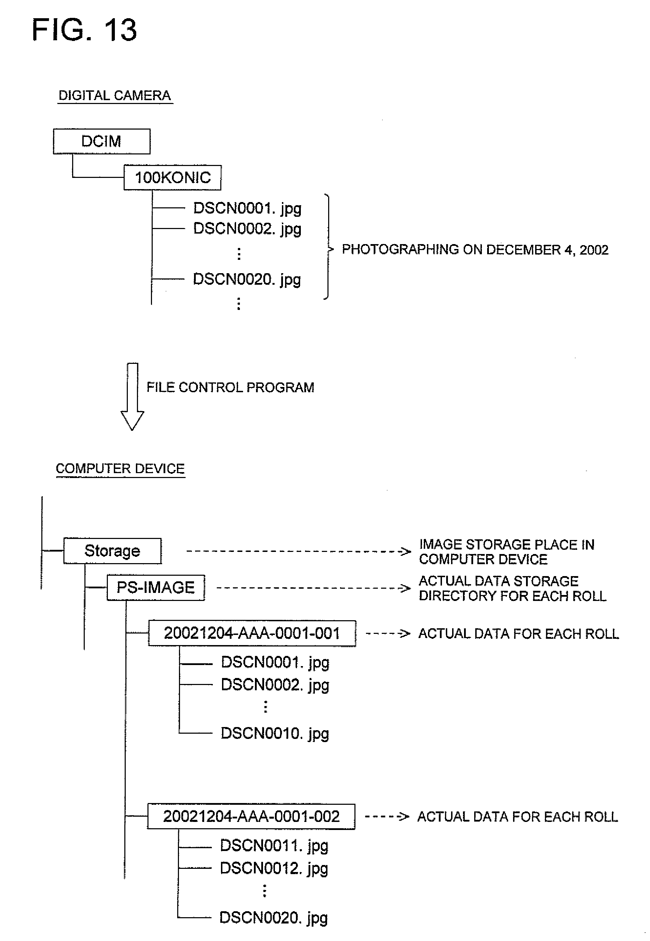

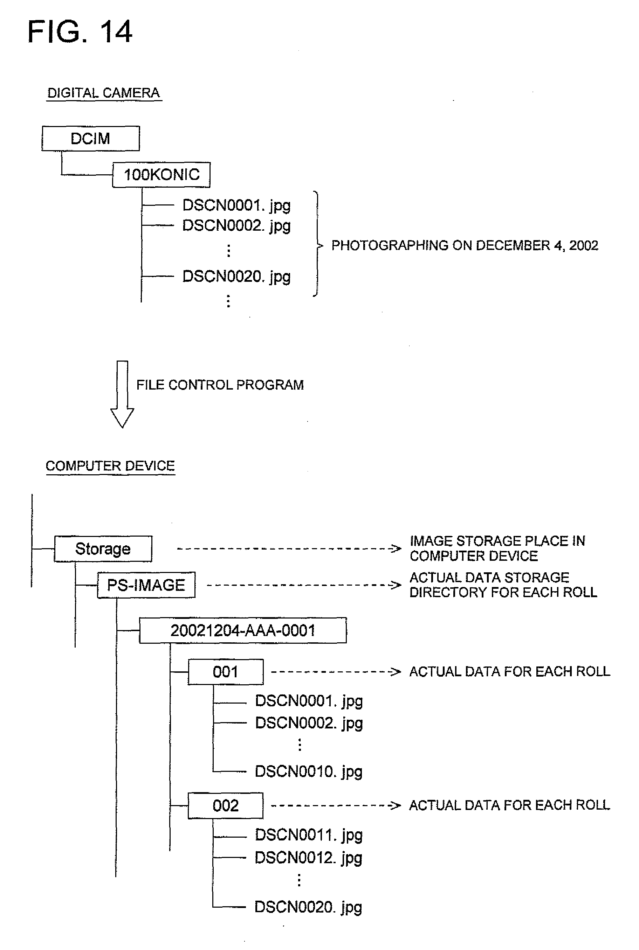

Further, in the explanation given above, a folder was prepared for each roll (each digital camera, each medium, each date and hour, or each film). However, when the number of files to be stored in each folder is large, or when a data volume of files to be stored in each folder is great, it is possible to divide a folder for each roll into plural portions and thereby to store a prescribed number or prescribed volume of files in each folder. For example, as shown in Fig. 13, when a large number of files are stored in a digital camera or a medium, it is possible to prepare folders in a quantity equivalent to the figure obtained by dividing the number of the files by a predetermined number (10 pieces in this case), by adding edaban to the same date information, for example, and to store files in predetermined quantity in each foler. Or, it is also possible to investigate a file size of the file stored in a digital camera or a medium, and to store successively the files with data volume equivalent to that determined in advance in each of plural folders prepared by adding edaban to the same date information, for example. Further, when storing plural files in plural folders by dividing them, it is possible to prepare separate folders such as "001" and "002" in the layer that is lower than the folder for each roll to store files corresponding to each folder as shown in Fig. 14, although the folders for respective rolls may be prepared side by side on the same layer.

As stated above, in the file control program of the present example, there is created automatically a name of the folder that stores a file by using defined information recorded on or attached to the file of a specific form taken from CD-R on which image data taken from a photographing equipment such as a digital camera and a camera-fitted cellphone, media for photographing equipment or negative films are recorded. Therefore, in the case of a digital camera in particular, a user can save time to give a name to a folder by itself each time the user records a file, which makes it possible for the user to arrange files simply.

By giving a date of photographing to a folder as stated above, it is possible to store in the folder that is given an appropriate name without confirming the contents of the file, even when arranging files whose contents are not clear unless they are opened by an application, as in the case of image data of photographs taken previously, in particular, thus, it is possible to control files by the structure in which a file is used easily, and the use of a photo-service employing image data can be promoted.

### (Example 2)

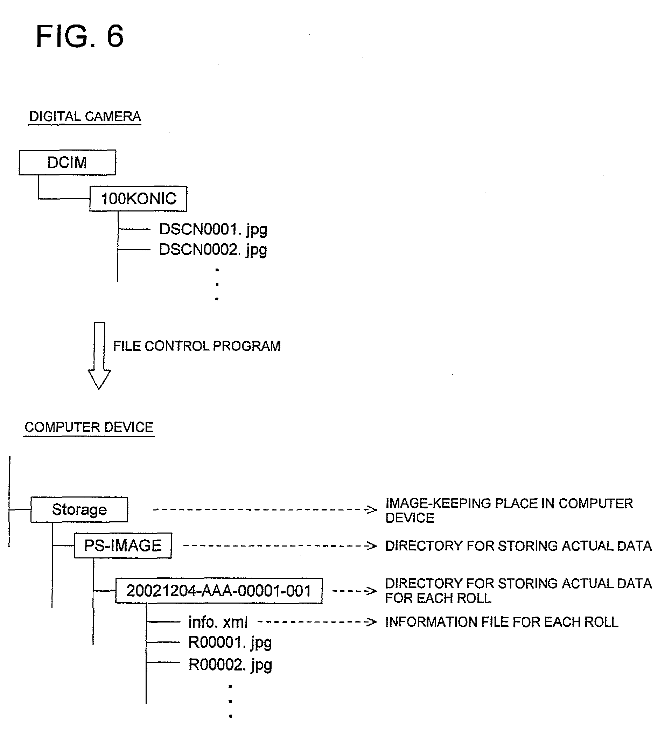

Next, the file control program relating to the Example 2 of the invention will be explained as follows, referring to Figs. 6 - 10. Each of Figs. 6 - 10 is a diagram showing an example of the structure of a folder made by the file control program of the present example. Incidentally, the present example is one showing a variation of the folder structure, and its basic structure is the same as that in the Example 1.

In the Example 1, there is provided an arrangement wherein a folder name is created by referring to defined information of a file, and only files recorded on photographing equipment and media are recorded on the file, and defined information obtained through reading by a file control program is useful as information for describing characteristics of the file. It is therefore possible to make and information file based on defined information thus read, and to store the file in the folder together with the file of image data. In that case, the computer is made to function as an information file making means, and defined information obtained through reading by defined information reading means 6 is shaped into a form standardized to be like info. xml by the use of a describing method like XML (Extensive Markup Language) and is described, and this information file is also recorded on the folder whose name is created by folder name creating means 7 as shown in Fig. 6. The information file on which the defined information like info. xml is recorded may also include information (for example, a title, a location, a comment and a person's name) which can be inputted freely by a user, even if the information is one other than the defined information examples based on the program.

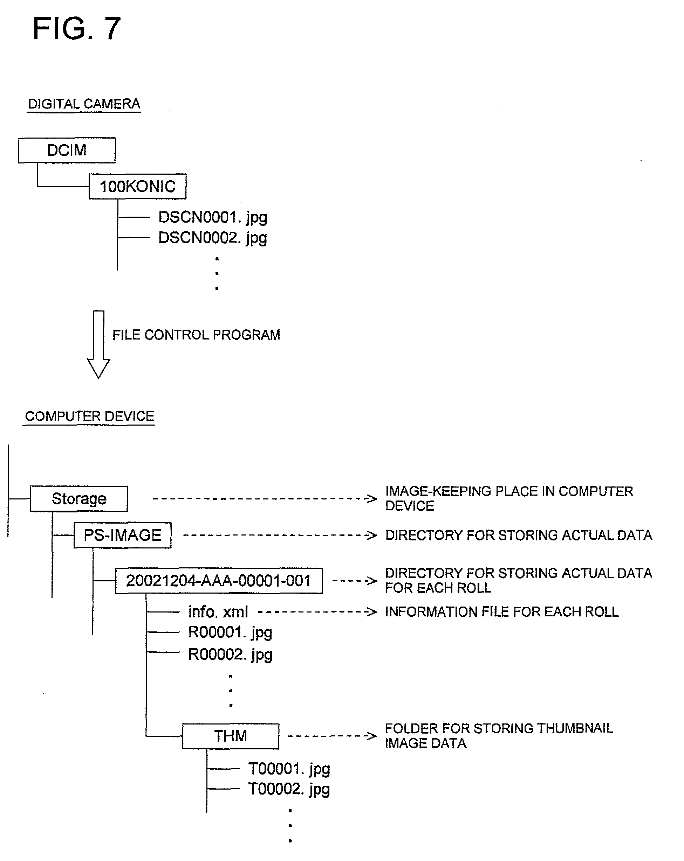

Although there is provided an arrangement wherein only files recorded on photographing equipment of a file provider and media are recorded on the file, in the Example 1, image data are displayed on an at sight basis by an application in many cases, and in that case, a thumbnail image data wherein a data size of image data is reduced is used. It is therefore possible to provide an arrangement wherein the computer is made to function as a means to generate thumbnail image data from the original image data, and thumbnail image data storage folder "THM" is provided to be lower than the folder whose name is created by folder name creating means 7 as shown in Fig. 7, for example, and thumbnail image data ("T00001.jpg and the like) are recorded on the aforesaid folder.

Incidentally, it is possible to establish the name of a thumbnail image data storage folder freely, and it is possible either to provide an arrangement to record original image data and thumbnail image data collectively on one folder without providing the thumbnail image data storage folder, or to provide an arrangement to record each set of thumbnail image data corresponding to each original image data by dividing with a folder.

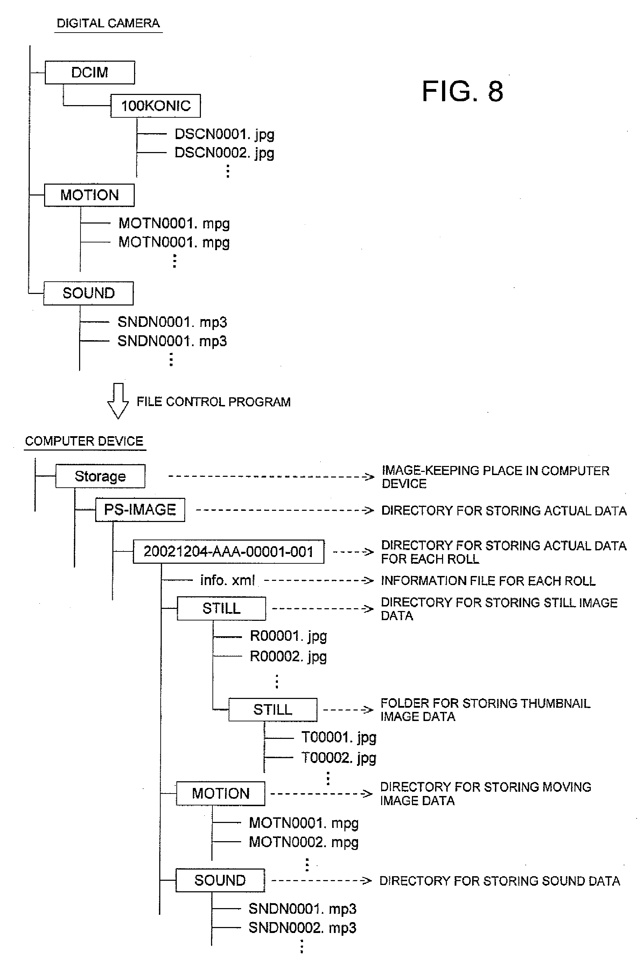

Although there is provided an arrangement wherein only still image data recorded on photographing equipment and media are recorded, in the Example 1, the file of the invention includes not only still image data but also data related to images (for example, sound data used in the case of slide-displaying moving image data an images), and these data can be recorded collectively. In that case, as shown in Fig. 8, for example, "STILL" folder showing the still image data storage directory, "MOTION" folder showing the moving image data storage directory and "SOUND" folder showing the sound data storage directory are provided, and still image data ("R00001. jpg), moving image data ("MOTN0001. mpg) and sound data ("SNDN0001. mp3) may be recorded. Incidentally, names of these folders can be established freely, and further, an arrangement wherein these data are stored collectively to be lower than the folder having the name given by folder name creating means 7 without dividing for each folder may also be provided.

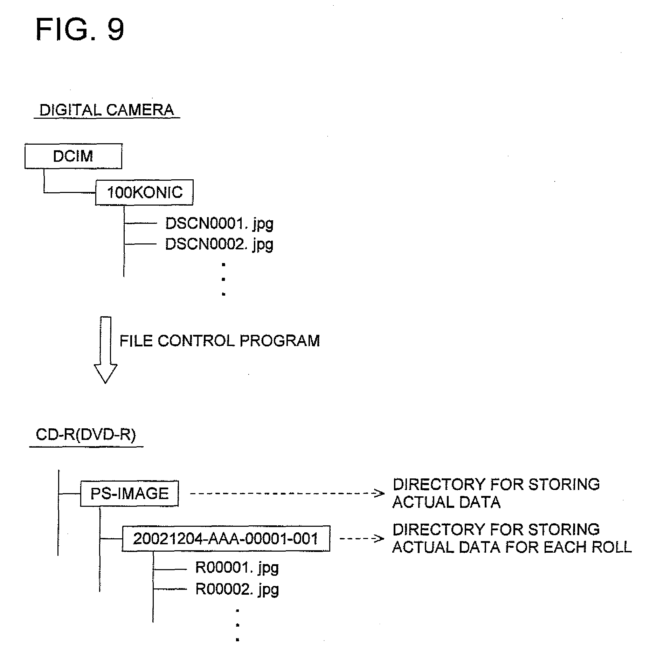

Although there is provided an arrangement wherein files recorded on photographing equipment and media are recorded on HDD2 of computer device 1, in the Example 1, an object on which a file is written may also be information recording media such as CD-R and DVD-R which are controlled by the computer device 1, a home server or a Web server connected to the computer device 1. When writing a file on CD-R or DVD-R, for example, there is employed an arrangement wherein a folder having the name created by folder name creating means 7 is made to be lower than "PS_IMAGE" folder showing an actual data storage directory as shown in Fig. 9, and a file is recorded on that folder.

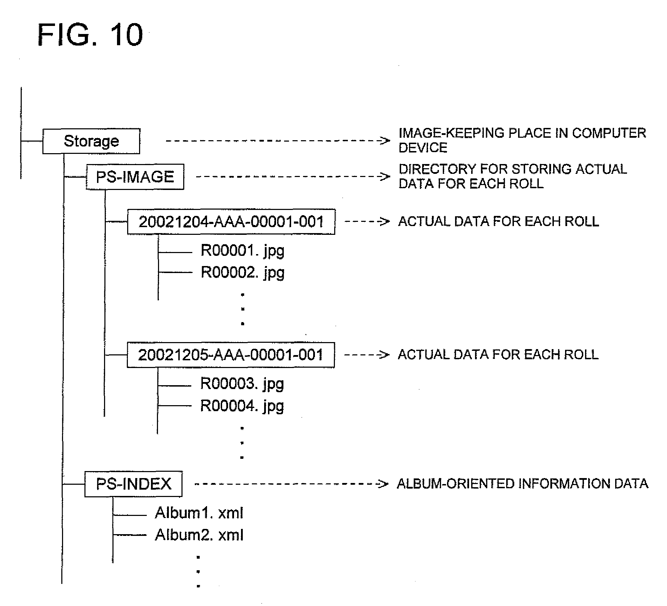

As shown in Fig. 10, it is further possible to make "PS_INDEX" folder on the same layer as that of "PS_IMAGE" and to record album-like information such as "Album1. xml" and "Album2 xml" in that folder, and for example, it is possible to control relatively to actual data for plural rolls in the "PS_IMAGE" folder and collectively, by controlling "PS_INDEX" folder and "PS_IMAGE" folder as a set continually in the folder called "Storage", which is effective for the actual image control. For example, when describing in "Album1. xml" referring to actual data in "PS_IMAGE" folder, if the relative positional relationship is the same, it is possible to describe in the way of "20021204_AAA_0001_001¥R00001. jpg", and no influence is exerted even when names of "Storage", "PS_IMAGE" and "PS_INDEX" are changed, which is effective in the case of export to the outside and import from the outside. Incidentally, in this case, album-like information data represent those described for indicating actual data or the like electronically by the use of a language such as XML, like arranging photographic prints in an album, and it is possible to express by using various means in addition to XML. Further, the "PS_INDEX" folder and the "PS_IMAGE" folder do not need to be on the same layer in particular if the positional relationship between those two folders is the same.

Incidentally, in each example stated above, there is described an occasion wherein the file control program of the invention is applied to image data having characteristics that data recorded through various forms and folder structures are dispersed to a wide variety of photographing equipment and media to be stored therein. However, the invention is not limited to the aforementioned example, but it can be applied equally to any file containing prescribed defined information, and for example, sound data stored in a wide variety of music playback equipment and information recording media can also be controlled collectively by the use of the file control program of the invention.

As explained above, the file control program of the invention makes it possible to write files in specific forms recorded in information recording media such as photographing equipment such as a digital camera and a camera-fitted cellphone, media for digital cameras and CD-R on other memory means in an easy-to-use structure.

The reason for the foregoing is as follows. By using the file control program that makes a computer to function as a folder name creating means, by using a defined information reading means that reads information wherein prescribed meaning recorded in or attached to the file of a specific form and by using information wherein prescribed meaning which has been read is defined in advance, a folder having an appropriate name for the file is made automatically without operations by a user to create a name of a folder to be stored in the file, and is stored in another memory means.

In particular, even when arranging files whose contents are not clear unless they are opened by an application, as in the case of image data of photographs taken previously, in particular, the file is stored in the folder whose appropriate name is given automatically thereto, and therefore, it is possible to control files by the structure in which a file is used easily, and the use of a photo-service employing image data can be promoted.

## Claims

1. A computer program product to control a computer to function as a folder name generating device to generate a folder name, the folder name generating device comprising:
a reading section to read information stored in or attached to a file of a specified format, wherein the information is defined so as to have a predetermined meaning; and
a folder name generating section to generate a folder name of a folder to control the file of the specified format on a basis of the information having the predetermined meaning.

2. The computer program product of claim 1, further comprising:
a judging section to judge whether the file is obtained by being photographed with a digital camera or by being imagewise captured with a film scanner, and
a transmitting section to transmit a message to ask a user to input the date of capturing the file with the film scanner when the judging section judges that the file is obtained by being imagewise capturing with a film scanner.

3. The computer program product of claim 2, further comprising:
a date specifying section to specify the capturing date from the image data of the file when the judging section judges that the file is obtained by being imagewise capturing with a film scanner.

4. The computer program product of claim 2, wherein when the file is obtained by being photographed with a digital camera, the folder name generating section generates a folder name for each of a digital camera, a media installed in the digital camera, a photographing date, a file and a predetermined data amount.

5. The computer program product of claim 2, wherein when the file is obtained by being imagewise captured with a film scanner, the folder name generating section generates a folder name for each film.
